# EUROPEAN PATENT SPECIFICATION

(11) **EP 1 995 867 B1**
(45) Date of publication and mention of the grant of the patent: **21.07.2010**
(21) Application number: 07425295.8
(22) Date of filing: 21.05.2007
(51) Int. Cl.: H02P 9/04

(54) **A control device and method of a gas turbine electric energy production plant**
Steuerungsvorrichtung und -verfahren für eine Gasturbinenanlage zur Produktion elektrischer Energie
Dispositif de contrôle et procédé d'installation de production d'énergie électrique d'une turbine à gaz

(43) Date of publication of application: 26.11.2008
(73) Proprietor: ANSALDO ENERGIA S.P.A., 16152 Genova (IT)
(72) Inventor: Barisione, Mario, 16011 Arenzano (IT); Ferrera, Flavio, 16131 Genova (IT)
(74) Representative: Jorio, Paolo

(56) References cited:
- EP-A- 0 858 153
- US-A1- 2004 008 010

## Description

The present invention relates to a control device and method of a gas turbine electric energy production plant.

Specifically, the present invention relates to a control device and method of a gas turbine electric energy production plant connected to a network working in disturbed conditions.

As it is known, gas turbine electric energy production plants normally comprise a motor assembly (turbo assembly), to which belong a variable geometry stage compressor, a combustion chamber, a gas turbine and a generator, mechanically connected to the same turbine and compressor shaft and connected to an electric distribution network through a main switch.

Turbo-gas plants are further equipped with control devices, which implement the various operations needed for the correct plant operation and for meeting the standard requirements related to the performances of plants in terms of safety, stability and capacity of responding to variations in the demand for power by the distribution network.

Normally, when connected to the electric network, the plant outputs an electric power at a frequency which is stably maintained by control devices about a given frequency value, named nominal frequency (50-60 Hz).

Indeed, the known control devices perform the so-called primary setting, which stabilizes the plant frequency by generating a variation in the supply of fuel to the combustion chamber according to the difference between the nominal frequency and the plant frequency. The primary setting generally implements a proportional control logic. An example of this kind of control devices is disclosed in EP-A-0858153. However, the primary setting is not always sufficient to guarantee the frequency stability of the delivered electric power.

The plant is usually connected to a network comprising a plurality of electric energy production plants and loads, organized in a grid structure. In ordinary conditions, all the plants connected to the network participate to the frequency setting, which is stabile and subjected only to modest fluctuations. According to the diverse operation needs, portions of the network, including one or more plants, may be selectively isolated, e.g. to prevent the propagation of possible faults.

However, major frequency variations which the primary setting cannot compensate may occur in an isolated plant, especially because the isolation of the plant intrinsically implies evident imbalances between the power delivered by the plant and the power consumed by the loads. Specifically, the known control devices are not always able to re-establish a condition of balance (delivered power = consumed power) and thus of reaching the nominal frequency value again, especially when high, rapid power and frequency imbalances occur. Indeed, the response dynamic of the known control devices is not sufficiently fast to prevent reaching of the plant running limits, which leads to the automatic disconnection from the network.

It is an object of the present invention to make a control device which is free from the drawbacks of the known art herein described; specifically, it is an object of the invention to make a control device capable of responding to rapid network frequency variations and to sudden power imbalances so as to prevent the disconnection of the plant from the network and so as to re-establish a situation of balance in the isolated plant.

In accordance with such objects, the present invention relates to a control device and method of a gas turbine electric energy production plant as claimed in claims 1 and 11, respectively.

Further features and advantages of the present invention will be apparent in the following description of a non-limitative example of embodiment thereof, with reference to the figures in the accompanying drawings, in which:
- figure 1 is a simplified block diagram of an electric energy production plant comprising a control device according to the present invention;
- figure 2 is a block diagram of a detail of the control device incorporated in the plant in figure 1.

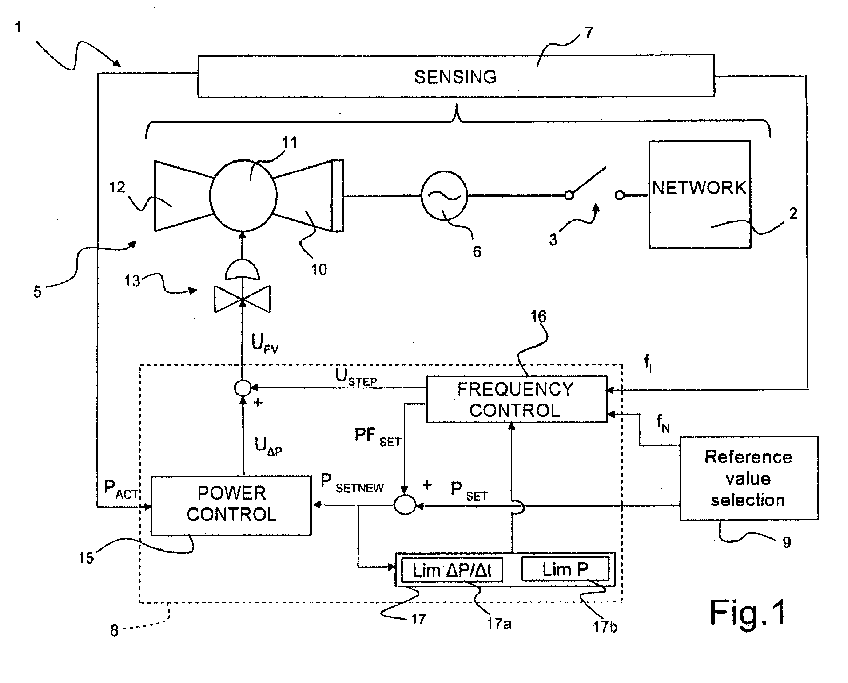

Figure 1 shows a gas turbine plant 1 for the production of electric energy. Plant 1 is selectively connectable to a distribution network 2 through a main switch 3 and comprises a turbo assembly 5, a generator 6, a detection module 7, a control device 8 and a reference value selection module 9.

Turbo assembly 5 is of the conventional type and comprises a compressor 10, a combustion chamber 11 and a gas turbine 12. Combustion chamber 11 receives the fuel through a feeding valve 13.

Generator 6 is mechanically connected to the same axis as turbine 12 and compressor 10 and is rotationally driven at the same angular rotation velocity ω of turbine 12 and compressor 10. Generator 6 transforms the mechanical power supplied by turbine 12 into active electric power, hereinafter simply named delivered power P and makes it available to distribution network 2 at a frequency f_{I}.

Detection module 7 is in communication with a plurality of sensors (not shown) of plant 1 and supplies a series of parameters related to plant 1, such as plant frequency f_{I}, delivered power P, turbine exhaust gas temperature 12 etc., to control device 8.

Reference value selection module 9 generates reference signals to be supplied to control device 8. Specifically, reference value selection module 9 supplies a nominal frequency value f_{N} (50-60 Hz) and a set power value P_{SET} to control device 8.

Control device 8 uses the parameters from detection module 7 and from reference value selection module 9 to generate control signals adapted to adjust the supply of fuel to combustion chamber 11 and the flow rate of air fed to compressor 10. Specifically, control device 8 generates a control signal U_{FV} which is sent to valve 13 to adjust the supply of fuel to combustion chamber 11.

Control device 8 comprises a plurality of control modules (not shown in figure) by means of which the plant variables are controlled, such as for example plant frequency f_{I}, delivered power P, turbine exhaust gas temperature 12, etc. Specifically, control device 8 comprises a power control module 15 and a frequency control module 16 and a limiting module 17.

Power control module 15 controls power P delivered by plant 1 according to a reference power value P_{SETNEW}. Specifically, power control module 15 receives as input a current delivered power value PACT from detection module 7, and a reference power value P_{SETNEW}, given by the sum of set power value P_{SET} from reference value selection module 9 and a power correction value PF_{SET} from frequency control module 16, and generates a control signal U_{ΔP} for controlling fuel feeding value 13 to combustion chamber 11. Preferably, power control module 15 implements a PID (Proportional Integral Derivative) control logic based on a power error, i.e. on the difference between current power P_{ACT} and reference power value P_{SETNEW} (P_{ACT}-P_{SETNEW}).

Frequency control module 16 receives as inputs nominal frequency value f_{N} and plant frequency value f_{I}, from detection module 7, and generates, on the basis of a frequency error e_{F} (f_{I}-f_{N}), a (positive or negative) power correction value PF_{SET} which is added to set power value P_{SET} to form reference power value P_{SETNEW}, and a control signal U_{STEP} for controlling fuel feeding valve 13 to combustion chamber 11 which is added to control signal U_{ΔP} from power control module 15.

Limiting module 17 comprises a power limiting module 17a and a gradient limiting module 17b.

Power limiting module 17a, considering the physical limits of plant 1, e.g. the maximum turbine exhaust temperature, or maximum turbine flow rate, limits reference power value P_{SETNEW} input to power control module 15. Specifically, when reference power value P_{SETNEW} exceeds a given threshold value, power limiting module 17a deactivates frequency control module 16 so as to prevent correction value PF_{SETNEW} from rising and compromising the operation of plant 1.

Gradient limiting module 17b limits reference power variation velocity P_{SETNEW}. Specifically, gradient limiting module 17b calculates reference power derivative P_{SETNEW}; if reference power derivative P_{SETNEW} exceeds a given threshold, gradient limiting module 17b deactivates frequency control module 16 so as to prevent correction value PF_{SETNEW} from further varying until reference power derivative P_{SETNEW} returns within the admitted values.

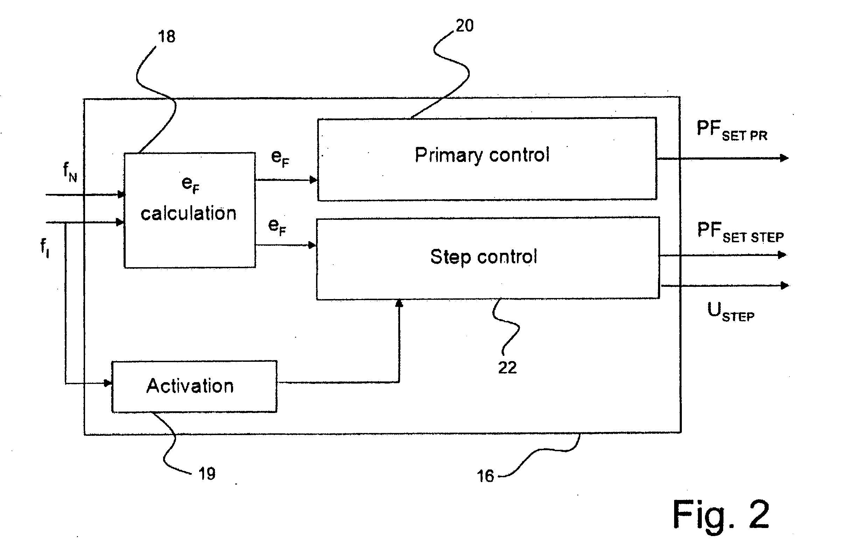

With reference to figure 2, frequency control module 16 comprises a frequency error calculation module 18, an activation module 19, a primary control module 20 and a step control module 22.

Frequency error calculation module 18 calculates frequency error e_{F} as the difference between plant frequency f_{I} and nominal frequency f_{N} (50-60 Hz). Frequency error value e_{F} is respectively fed to primary control module 20 and to integral control module 22.

Activation module 19 receives frequency value f_{I} of plant 1 as input, stores it and calculates the derivative thereof on the basis of the last received frequency value f_{I} and of the previously stored frequency values. In essence, frequency derivative f_{I} provides an indication of the variation velocity of frequency f_{I} of plant 1 and thus an indication of the variation velocity of frequency f_{I} with respect to nominal frequency value f_{N}.

Activation module 19 activates step control module 22 if the derivative of frequency f_{I} exceeds a given threshold value S, for example fixed at approximately ±0.1 Hz/sec. In order to prevent step control module 22 from being activated several times in rapid sequence, the activation of step control module 22 by activation module 19 is inhibited for predetermined intervals, e.g. less than one minute.

At the same time, again if frequency derivative f_{I} exceeds threshold value S, activation module 19 deactivates gradient limiting module 17b for a predetermined time interval, e.g. approximately 3-4 s. As shown in detail below, this prevents rapid variations of correction value PF_{SET} determined by step control module 22 from being cancelled by the limiting action of gradient limiting module 17b.

Primary control module 20 is always active and provides a correction value PF_{SETPR} according to frequency error e_{F} which is added to set power value P_{SET}, forming reference power value P_{SETNEW} as input to power control module 15. For example, primary control module 20 is of the proportional type. Naturally, primary control module 20 may also be implemented according to an integral or derivative control logic, or a combination thereof.

Step control module 22 outputs a control signal U_{STEP}, concurrent with control signal U_{ΔP} output from power control module 15, and a (positive or negative) power correction value PF_{SETSTEP} which is added to set power value P_{SET}, forming reference power value P_{SETNEW} as input to power control module 15.

The control action of frequency control module 16 is essentially determined by step control module 22, despite primary control module 20 being always active, because step control module 22 is characterized by a very fast control action which prevails and essentially cancels that of primary control module 20.

Therefore, when step control module 22 is activated, i.e. when threshold S is exceeded by the derivative of plant frequency f_{I}, correction value PF_{SET}, which is added to reference power value P_{SET}, is essentially correction value PF_{SETSTEP} output by step control module 22.

Specifically, correction value PF_{SETSTEP} output from step module 22 always determines a step increase with respect to correction value PF_{SETPR} output by primary control module 20 which was supplied by power control module 15 until step control module 22 was activated. Such correction value PF_{SETSTEP} output by step module 22 is calculated, from frequency error e_{F}, by means of a linear function with saturation, so as to limit the maximum positive and minimum negative values of power correction value PF_{SETSTEP}. In the embodiment shown in the accompanying figures, maximum positive and minimum negative values of power correction value PF_{SETSTEP} are equal to approximately +15 MW and approximately -45 MW.

Control signal U_{STEP} is a step signal which controls the rapid opening or closing of fuel feeding valve 13 for a limited period of time, generally a few seconds (e.g. approximately 3-4 seconds) variable according to the situation. Control signal U_{STEP} preferably depends on frequency error value e_{F} and is affected by the maximum positive and minimum negative limits of power correction value PF_{SETSTEP}.

Control signal U_{STEP} is concurrent with control signal U_{ΔP}. Specifically, control signal U_{STEP} is added to control signal U_{ΔP} output by power control module 15. Essentially, control signal U_{STEP} is prevalent with respect to control signal U_{ΔP} from power control module 15, meaning that, in the transient subsequent to the generation of control signal U_{STEP}, the control action on valve 13 is mainly determined by control signal U_{STEP}.

The variation velocity of power correction value PF_{SETSTEP} output by step control module 22 generally exceeds the limit defined by gradient limiter 17b, because the control action of step control module 22 must necessarily be fast enough to update reference power value P_{SETNEW} input to power control module 15 with power correction value PF_{SETSTEP} from step control module 22.

However, as previously mentioned, gradient limiting module 17b is temporarily deactivated when step control module 22 is activated so as to allow power control module 15 to nearly instantaneously align reference power value P_{SETNEW} and power value PACT generated in virtue of control signal U_{STEP} from step control module 22.

In practice, step control module 22 maximizes the potentials of plant 1 imposing, by means of control signal U_{STEP}, a sudden, high increase (or decrease) of the delivered power so as to compensate the fast variation of plant frequency f_{I} to prevent the disconnection of plant 1 from network 2.

Control device 8 however ensures the immediate disconnection for reasons of safety of plant 1 from network 2 in particularly critical conditions.

Specifically, control device 8 guarantees the immediate disconnection from network 2 if the maximum and minimum safety limits of the frequency value of plant f_{I} (generally about +1.5 Hz and -2.5 Hz with respect to nominal frequency value f_{N}) are exceeded. In this situation, plant 1 is disconnected from network 2 and feeds the so-called plant auxiliaries, i.e. the loads inside plant 1 itself.

A second immediate disconnection situation of plant 1 from network 2 occurs in high delivered power derivative (d(P_{ACT})/dt>threshold) and low delivered power (P_{ACT}<threshold equal to approximately 10MW) conditions. Such conditions are comparable to a total power rejection, i.e. to a disconnection in some point of network 2 not detectable by detector module 7 and thus non visible to control system 8 of plant 1.

The high variation of delivered power and the relatively low value of delivered power, generally in the order of tens of MW, are indeed a symptom of a disconnection between network 2 and plant 1 because the loads of plant 1 may only be plant auxiliaries, which in themselves consume at least a power in the order 6-7 MW. Control device 8 according to the present invention presents the following advantages.

Firstly, control device 8 allows plant 1 to prevent disconnection from network 2 during the transient events which induce rapid imbalance between network frequency (f_{N}) and frequency f_{I} of plant 1. Plant 1, in virtue of control device 8 is capable of facing the rapid frequency variations with a rapid power variation at the maximum of its potentials. In such manner, the plant contributes to better overcoming these transient events so that the primary setting may subsequently re-establish a frequency value f_{I} in the plant close to nominal value f_{N}.

Furthermore, control device 8 may be installed both in new plants and in plants which are already running because its installation does not require any structural intervention.

It is finally apparent that changes and variations may be made to the control device described herein without departing from the scope of protection of the accompanying claims.

## Claims

1. A control device of a gas turbine electric energy production plant (1), which delivers a power (P) at a frequency (f_{I}); the control device (8) comprising power control-means (15), for controlling the power (P) delivered by the plant (1) by means of a first control signal (U_{ΔP}) which determines the supply of fuel to a portion (11) of the plant (1) according to a reference power value (P_{SETNEW}), and frequency control means (16), for determining the correction values (PF_{SETSTEP};PF_{SETPR}) of the reference power value (P_{SETNEW}) according to a frequency error (e_{F}), given by the difference between the plant frequency (f_{I}) and a nominal frequency (f_{N}) ; the device (8) being **characterized in that** the frequency control means (16) comprise step control means (22) configured to adjust the supply of fuel to the portion (11) of the plant (1) by means of a second control signal (U_{STEP}) concurrent with the first control signal (U_{Δ}p), when the derivative of the frequency (f_{I}) of the plant (1) assumes values higher than a threshold value (S).

2. A control device according to claim 1, **characterized in that** the step control means (22) are configured to determine first correction values (PF_{SETSTEP}) of the reference power value (P_{SETNEW}) when the derivative of the frequency (f_{I}) of the plant (1) assumes values higher than the threshold value (S).

3. A device according to claim 2, **characterized in that** the step control means (22) are configured to generate first correction values (PF_{SETSTEP}) so as to determine a step variation of the reference power value (P_{SETNEW}).

4. A device according to claim 3, **characterized in that** the step control means (22) are configured to generate first correction values (PF_{SETSTEP}) according to a linear function of the frequency error (e_{F}).

5. A device according to claim 4, **characterized in that** the linear function of the frequency error (e_{F}) presents maximum and minimum saturation limits of the first correction value (PF_{SETSTEP}).

6. A device according to any of the preceding claims, **characterized in that** the second control signal (U_{STEP}) is a step signal.

7. A control device according to any of the claims from 2 to 6, **characterized in that** the frequency control means (16) comprise primary control means (20) configured for calculating second correction values (PF_{SETPR}) of the reference power value (P_{SETNEW}) when the derivative of the frequency (f_{I}) of the plant (1) assumes values lower than the threshold value (S).

8. A device according to any of the claims from 2 to 7, **characterized in that** it comprises power limiting means (17a) configured to limit the reference power value (P_{SETNEW}) .

9. A device according to any of the claims from 2 to 8, **characterized in that** it comprises power gradient limiting means (17b) configured to limit the value of the derivative of the reference power (P_{SETNEW}) .

10. A device according to claim 9, **characterized in that** the gradient limiting means are deactivated for a period of time when the derivative of the frequency (f_{I}) of the plant (1) assumes values higher than the threshold value (S).

11. A control method of a gas turbine electric energy production plant (1), which delivers a power (P) at a frequency (f_{I}); the method comprising the steps of:
controlling the power (P) delivered by the plant (1) according to a reference power value (P_{SETNEW}) by means of a first control signal (U_{ΔP}) which determines the supply of fuel to a portion (11) of the plant (1);
controlling the frequency (16), for determining correction values (PF_{SETSTEP};PF_{SETPR}) of the reference power vale (P_{SETNEW}) according to a frequency error (e_{F}) , given by the difference between the plant frequency (f_{I}) and a nominal frequency (f_{N}); the method being **characterized in that** the step of controlling the frequency comprises adjusting the supply of fuel to the portion (11) of the plant (1) by means of a second control signal (step), concurrent with the first control signal (U_{ΔP}), when the derivative of the frequency (f_{I}) of the plant (1) assumes values higher than a threshold value (S).

12. A method according to claim 11, **characterized in that** the step of controlling the frequency comprises determining first correction values (PF_{SETSTEP}) of the reference power value (P_{SETNEW}) when the derivative of the frequency (f_{I}) of the plant (1) assumes values higher than the threshold value (S).

13. A method according to claim 12, **characterized in that** the first correction values (PF_{SETSTEP}) are so as to determine a step variation of the reference power value (P_{SETNEW}) .

14. A method according to claim 12 or 13, **characterized in that** the step of controlling the frequency comprises determining first correction values (PF_{SETSTEP}) according to a linear function of the frequency error (e_{F}).

15. A method according to claim 14, **characterized in that** the linear function of the frequency error (e_{F}) presents maximum and minimum saturation limits of the first correction value (PF_{SETSTEP}) .

16. A method according to any of the claims from 11 to 15, **characterized in that** the second control signal (U_{STEP}) is a step signal.

17. A control method according to any of the claims from 12 to 16, **characterized in that** the step of controlling the frequency comprises calculating second correction values (PF_{SETPR}) of the reference power value (P_{SETNEW}) when the derivative of the frequency (f_{I}) of the plant (1) assumes values lower than the threshold value (S).

18. A method according to any of the claims from 11 to 17, **characterized in that** it limits the reference power value (P_{SETNEW}).

19. A method according to any of the claims from 11 to 18, **characterized in that** it limits the value of the derivative of the reference power (P_{SETNEW}) .

20. A method according to claim 19, **characterized in that** it does not limit the value of the derivative of the reference power (P_{SETNEW}) for a given period of time when the derivative of the frequency (f_{I}) of the plant (1) assumes values higher than the threshold value (S).

## Patentansprüche

1. Steuervorrichtung für eine Gasturbinenanlage (1) für die Erzeugung elektrischer Energie, die Leistung (P) mit einer Frequenz (f_{I}) liefert; wobei die Steuervorrichtung (8) Leistungssteuermittel (15), um die von der Anlage (1) gelieferte Leistung (P) mittels eines ersten Steuersignals (U_{ΔP}), das die Zufuhr von Brennstoff zu einem Abschnitt (11) der Anlage (1) bestimmt, in Übereinstimmung mit einem Referenzleistungswert (P_{SETNEW}) zu steuern, und Frequenzsteuermittel (16), um die Korrekturwerte (PF_{SETSTEP}; PF_{SETPR}) des Referenzleistungswerts (P_{SETNEW}) in Übereinstimmung mit einem Frequenzfehler (e_{F}) zu bestimmten, der durch die Differenz zwischen der Anlagenfrequenz (f_{I}) und einer Nennfrequenz (f_{N}) gegeben ist, umfasst,; wobei die Vorrichtung (8) **dadurch gekennzeichnet ist, dass** die Frequenzsteuermittel (16) Stufensteuermittel (22) umfassen, die konfiguriert sind, um die Zufuhr von Brennstoff zu dem Abschnitt (11) der Anlage (1) mittels eines zweiten Steuersignals (U_{STEP}) konkurrent mit dem ersten Steuersignal (U_{ΔP}) einzustellen, wenn die Ableitung der Frequenz (f_{I}) der Anlage (1) einen Wert annimmt, der höher als ein Schwellenwert (S) ist.

2. Steuervorrichtung nach Anspruch 1, **dadurch gekennzeichnet, dass** die Stufensteuermittel (22) konfiguriert sind, um erste Korrekturwerte (PF_{SETSTEP}) des Referenzleistungswertes (P_{SETNEW}) zu bestimmen, wenn die Ableitung der Frequenz (f_{I}) der Anlage (1) Werte annimmt, die höher als der Schwellenwert (S) sind.

3. Vorrichtung nach Anspruch 2, **dadurch gekennzeichnet, dass** die Stufensteuermittel (22) konfiguriert sind, um erste Korrekturwerte (PF_{SETSTEP}) zu erzeugen, um eine Stufenveränderung des Referenzleistungswertes (P_{SETNEW}) zu bestimmen.

4. Vorrichtung nach Anspruch 3, **dadurch gekennzeichnet, dass** die Stufensteuermittel (22) konfiguriert sind, um erste Korrekturwerte (PF_{SETSTEP}) in Übereinstimmung mit einer linearen Funktion des Frequenzfehlers (e_{F}) zu erzeugen.

5. Vorrichtung nach Anspruch 4, **dadurch gekennzeichnet, dass** die lineare Funktion des Frequenzfehlers (e_{F}) maximale und minimale Sättigungsgrenzen des ersten Korrekturwerts (PF_{SETSTEP}) aufweiset.

6. Vorrichtung nach einem der vorhergehenden Ansprüche, **dadurch gekennzeichnet, dass** das zweiten Steuersignal (U_{STEP}) ein Stufensignal ist,

7. Steuervorrichtung nach einem der Ansprüche 2 bis 6, **dadurch gekennzeichnet, dass** die Frequenzsteuermittel (16) primäre Steuermittel (20) umfassen, die konfiguriert sind, um zweite Korrekturwerte (PF_{SETPR}) des Referenzleistungswertes (P_{SETNEW}) zu berechnen, wenn die Ableitung der Frequenz (f_{I}) der Anlage (1) Werte annimmt, die niedriger als der Schwellenwert (S) sind.

8. Vorrichtung nach einem der Ansprüche 2 bis 7, **dadurch gekennzeichnet, dass** sie Leistungsbegrenzungsmittel (17a) umfasst, die konfiguriert sind, um den Referenzleistungswert (P_{SETNEW}) zu begrenzen.

9. Vorrichtung nach einem der Ansprüche 2 bis 8, **dadurch gekennzeichnet, dass** sie Leistungsgradientenbegrenzungsmittel (17b) umfasst, die konfiguriert sind, um den Wert der Ableitung der Referenzleistung (P_{SETNEW}) zu begrenzen.

10. Vorrichtung nach Anspruch 9, **dadurch gekennzeichnet, dass** die Gradientenbegrenzungsmittel während einer Zeitdauer, in der die Ableitung der Frequenz (f_{I}) der Anlage (I) Werte annimmt, die höher als der Schwellenwert (S) sind, deaktiviert werden.

11. Steuerverfahren einer Gasturbinenanlage (1) für die Erzeugung elektrischer Energie, die Leistung (P) mit einer Frequenz (f_{I}) liefert, wobei das Verfahren die folgenden Schritte umfasst:
Steuern der von der Anlage (1) gelieferten Leistung (P) in Übereinstimmung mit einem Referenzleistungswert (P_{SETNEW}) mittels eines ersten Steuersignals (U_{ΔP}), das die Zufuhr von Brennstoff zu einem Abschnitt (11) der Anlage (1) bestimmt;
Steuern der Frequenz (16), um Korrekturwerte (PF_{SETSTEP}; PF_{SETPR}) des Referenzleistungswertes (P_{SETNEW}) in Übereinstimmung mit einem Frequenzfehler (e_{F}) zu bestimmen, der durch die Differenz zwischen der Anlagenfrequenz (f_{I}) und einer Nennfrequenz (f_{N}) gegeben ist; wobei das Verfahren **dadurch gekennzeichnet ist, dass** der Schritt des Steuerns der Frequenz das Einstellen der Zufuhr von Brennstoff zu dem Abschnitt (11) der Anlage (1) mittels eines zweiten Steuersignals (U_{STEP}) konkurrent mit dem ersten Steuersignal (U_{ΔP}) umfasst, wenn die Ableitung der Frequenz (f_{I}) der Anlage (1) Werte annimmt, die höher als ein Schwellenwert (S) sind.

12. Verfahren nach Anspruch 11, **dadurch gekennzeichnet, dass** der Schritt des Steuerns der Frequenz das Bestimmen erster Korrekturwerte (PF_{SETSTEP}) des Referenzleistungswertes (P_{SETNEW}) umfasst, wenn die Ableitung der Frequenz (f_{I}) der Anlage (1) Werte annimmt, die höher als der Schwellenwert (S) sind.

13. Verfahren nach Anspruch 12, **dadurch gekennzeichnet, dass** die ersten Korrekturwerte (PF_{SETSTEP}) derart sind, dass eine Stufenveränderung des Referenzleistungswertes P_{SETNEW}) bestimmt wird.

14. Verfahren nach Anspruch 12 oder 13, **dadurch gekennzeichnet, dass** der Schritt des Steuerns der Frequenz das Bestimmen erster Korrekturwerte (PF_{SETSTEP}) in übereinstimmung mit einer linearen Funktion des Frequenzfehlers (e_{F}) umfasst.

15. Verfahren nach Anspruch 14, **dadurch gekennzeichnet, dass** die lineare Funktion des Frequenzfehlers (e_{F}) maximale und minimale Sättigungsgrenzen des ersten Korrekturwerts (PF_{SETSTEP}) aufweist.

16. Verfahren nach einem der Ansprüche 11 bis 15, **dadurch gekennzeichnet, dass** das zweite Steuersignal (U_{STEP}) ein Stufensignal ist.

17. Steuerverfahren nach einem der Ansprüche 12 bis 16, **dadurch gekennzeichnet, dass** der Schritt des Steuerns der Frequenz das Berechnen zweiter Korrekturwerte (PF_{SETPR}) des Referenzleistungswertes (P_{SETNEW}) umfasst, wenn die Ableitung der Frequenz (f_{I}) der Anlage (1) Werte annimmt, die niedriger als der Schwellenwert (S) sind.

18. Verfahren nach einem der Ansprüche 11 bis 17, **dadurch gekennzeichnet, dass** es den Referenzleistungswert (P_{SETNEW}) begrenzt.

19. Verfahren nach einem der Ansprüche 11 bis 18, **dadurch gekennzeichnet, dass** es den Wert der Ableitung der Referenzleistung (P_{SETNEW}) begrenzt.

20. Verfahren nach Anspruch 19, **dadurch gekennzeichnet, dass** es den Wert der Ableitung der Referenzleistung (P_{SETNEW}) während einer gegebenen Zeitdauer, in der die Ableitung der Frequenz (f_{I}) der Anlage (1) Werte annimmt, die höher als der Schwellenwert (S) sind, nicht begrenzt.

## Revendications

1. Dispositif de commande d'une installation de production d'énergie électrique de turbine à gaz (1), qui délivre une puissance (P) à une fréquence (f_{I}) ; le dispositif de commande (8) comprenant des moyens de commande de la puissance (15), pour commander la puissance (P) délivrée par l'installation (1) au moyen d'un premier signal de commande (U_{ΔP}) qui détermine la fourniture de carburant à une partie (11) de l'installation (1) selon une valeur de puissance de référence (P_{SETNEW}) , et des moyens de commande de fréquence (16), pour déterminer les valeurs de correction (PF_{SETSTEP}; PF_{SETPR}) de la valeur de puissance de référence (P_{SETNEW}) selon une erreur de fréquence (e_{F}), donnée par la différence entre la fréquence de l'installation (f_{I}) et une fréquence nominale (f_{N}) ; le dispositif (8) étant **caractérisé en ce que** les moyens de commande de fréquence (16) comprennent des moyens de commande graduelle (22) configurés pour régler la fourniture de carburant à la partie (11) de l'installation (1) au moyen d'un deuxième signal de commande (U_{STEP}) simultané au premier signal de commande (U_{ΔP}) lorsque la dérivée de la fréquence (f_{I}) de l'installation (1) suppose des valeurs supérieures à une valeur de seuil (S).

2. Dispositif de commande selon la revendication 1, **caractérisé en ce que** les moyens de commande graduelle (22) sont configurés pour déterminer des premières valeurs de correction (PF_{SETSTEP}) de la valeur de puissance de référence (P_{SETNEW}) lorsque la dérivée de la fréquence (f_{I}) de l'installation (1) prend des valeurs supérieures à la valeur de seuil (S).

3. Dispositif selon la revendication 2, **caractérisé en ce que** les moyens de commande graduelle (22) sont configurés pour générer des premières valeurs de correction (PF_{SETSTEP}) de manière à déterminer une variation graduelle de la valeur de puissance de référence (P_{SETNEW}).

4. Dispositif selon la revendication 3, **caractérisé en ce que** les moyens de commande graduelle (22) sont configurés pour générer des premières valeurs de correction (PF_{SETSTEP}) selon une fonction linéaire de l'erreur de fréquence (e_{F}) .

5. Dispositif selon la revendication 4, **caractérisé en ce que** la fonction linéaire de l'erreur de fréquence (e_{F}) présente des limites de saturation maximale et minimale de la première valeur de correction (PF_{SETSTEP}).

6. Dispositif selon l'une quelconque des revendications précédentes, **caractérisé en ce que** le deuxième signal de commande (U_{STEP}) est un signal en échelon.

7. Dispositif de commande selon l'une quelconque des revendications 2 à 6, **caractérisé en ce que** les moyens de commande de la fréquence (16) comprennent des moyens de commande primaires (20) configurés pour calculer des deuxièmes valeurs de correction (PF_{SETPR}) de la valeur de puissance de référence (P_{SETNEW}) lorsque la dérivée de la fréquence (f_{I}) de l'installation (1) prend des valeurs inférieures à la valeur de seuil (S).

8. Dispositif selon l'une quelconque des revendications 2 à 7, **caractérisé en ce qu'**il comprend des moyens de limitation de la puissance (17a) configurés pour limiter la valeur de puissance de référence (P_{SETNEW}).

9. Dispositif selon l'une quelconque des revendications 2 à 8, **caractérisé en ce qu'**il comprend des moyens de limitation de variation de puissance (17b) configurés pour limiter la valeur de la dérivée de la puissance de référence (P_{SETNEW}).

10. Dispositif selon la revendication 9, **caractérisé en ce que** les moyens de limitation de variation de puissance sont désactivés pendant une période de temps lorsque la dérivée de la fréquence (f_{I}) de l'installation (1) prend des valeurs supérieures à la valeur de seuil (S).

11. Procédé de commande d'une installation de production d'énergie électrique de turbine à gaz (1) qui dégage une puissance (P) à une fréquence (f_{I}) ; le procédé comprenant les étapes de :
commande de la puissance (P) délivrée par l'installation (1) selon une valeur de puissance de référence (P_{SETNEW}) au moyen d'un premier signal de commande (U_{ΔP}) qui détermine la fourniture de carburant à une partie (11) de l'installation (1) ;
commande de la fréquence (16), pour déterminer des valeurs de correction (PF_{SETSTEP} ; PF_{SETPR}) de la valeur de puissance de référence (P_{SETNEW}) selon une erreur de fréquence (e_{f}), donnée par la différence entre la fréquence de l'installation (f_{I}) et une fréquence nominale (f_{N}) ; le procédé étant **caractérisé en ce que** l'étape de commande de la fréquence comprend le réglage de la fourniture de carburant à la partie (11) de l'installation (1) au moyen d'un deuxième signal de commande (U_{STEP}), simultané au premier signal de commande (U_{ΔP}), lorsque la dérivée de la fréquence (f_{I}) de l'installation (1) prend des valeurs supérieures à une valeur de seuil (S).

12. Procédé selon la revendication 11, **caractérisé en ce que** l'étape de commande de la fréquence comprend la détermination de premières valeurs de correction (PE_{SETSTEP}) de la valeur de puissance de référence (P_{SETNEW}) lorsque la dérivée de la fréquence (f_{I}) de l'installation (1) prend des valeurs supérieures à la valeur de seuil (S).

13. Procédé selon la revendication 12, **caractérisé en ce que** les premières valeurs de correction (PF_{SETSTEP}) sont telles qu'elles déterminent une variation graduelle de la valeur de puissance de référence (P_{SETNEW}).

14. Procédé selon la revendication 12 ou 13, **caractérisé en ce que** l'étape de commande de la fréquence comprend la détermination de premières valeurs de correction PF_{SETSTEP}) selon une fonction linéaire de l'erreur de fréquence (e_{F}) .

15. Procédé selon la revendication 14, **caractérisé en ce que** la fonction linéaire de l'erreur de fréquence (e_{F}) présente des limites de saturation maximale et minimale de la première valeur de correction (PF_{SETSTEP}) .

16. Procédé selon l'une quelconque des revendications 11 à 15, **caractérisé en ce que** le deuxième signal de commande (USTEP) est un signal en échelon.

17. Procédé de commande selon l'une quelconque des revendications 12 à 16, **caractérisé en ce que** l'étape de commande de la fréquence comprend le calcul de deuxièmes valeurs de correction (PF_{SETPR}) de la valeur de puissance de référence (P_{SETNEW}) lorsque la dérivée de la fréquence (f_{I}) de l'installation (1) prend des valeurs inférieures à la valeur de seuil (S) .

18. Procédé selon l'une quelconque des revendications 11 à 17, **caractérisé en ce qu'**il limite la valeur de puissance de référence (P_{SETNEW}) .

19. Procédé selon l'une quelconque des revendications 11 à 18, **caractérisé en ce qu'**il limite la valeur de la dérivée de la puissance de référence (P_{SETNEW}) .

20. Procédé selon la revendication 19, **caractérisé en ce qu'** il ne limite pas la valeur de la dérivée de la puissance de référence (P_{SETNEW}) pour une période de temps donnée lorsque la dérivée de la fréquence (f_{I}) de l'installation (1) prend des valeurs supérieures à la valeur de seuil (S).
